# DEMANDE DE BREVET EUROPEEN

(11) **EP 0 670 109 A1**
(43) Date de publication de la demande: **06.09.1995**
(21) Numéro de dépôt: 95870019.7
(22) Date de dépôt: 28.02.1995
(51) Int. Cl.: A01G 9/22

(54) **Dispositif de recouvrement amovible destiné à des serres**

(30) Priorité: 01.03.1994 BE 9400239
(71) Demandeur: Devisch, André, B-8490 Jabbeke (BE)
(72) Inventeur: Devisch, André, B-8490 Jabbeke (BE); Maes, Jacques, B-8700 Tielt (BE)
(74) Mandataire: Van Malderen, Michel

(57) **Abrégé**

Dispositif de recouvrement amovible destiné à des serres, comportant une feuille souple, caractérisé en ce que cette feuille souple (5) est enroulable dans un profil ouvert (10) monté sur un chariot (1) déplaçable sur la charpente de la serre depuis un point haut de la serre (en principe son faîte) jusqu'au point bas de la serre et inversement, et qu'un tube d'enroulement (43) interne pour la feuille souple (5) est monté dans le profil ouvert (10), le mouvement de déplacement du profil ouvert (10) avec le chariot (1) entraînant un mouvement de rotation du tube d'enroulement (43) de manière que, finalement, le déplacement du profil ouvert (10) provoque l'enroulement ou le déroulement de la feuille souple (5).

## Description

### Objet de l'invention.

La présente invention concerne un dispositif de recouvrement amovible servant de toiture pour des serres et similaires.

### Arrière-plan technologique de l'invention.

L'utilisation de recouvrement de serre en matière plastique en remplacement du verre se développe de plus en plus.

En particulier, l'utilisation d'une feuille souple de matière plastique transparente ou translucide en remplacement du verre a de plus en plus de succès.

Pour de nombreuses cultures, il est particulièrement intéressant pendant la saison d'été de pouvoir ouvrir la serre à l'air libre. Comme d'autre part, la plupart des feuilles en matière plastique, même si elles sont traitées spécifiquement, présentent une résistance limitée aux UV, il est souhaitable de pouvoir enrouler la couverture souple pour la soustraire en été ou tout simplement pendant la journée à l'action des UV.

A priori, il pourrait sembler que la solution la plus efficace consiste à prévoir un cylindre d'enroulement au sommet de la serre, de guider latéralement la feuille par des dispositifs appropriés et de tendre celle-ci à sa partie inférieure, par exemple sur une latte, de manière plus ou moins similaire aux auvents de protection solaire montés devant les fenêtres d'immeubles.

L'ouverture partielle de la serre a dans ce cas comme conséquence que la partie qui reste couverte est la partie supérieure.

Cependant, une telle solution ne rencontre pas tous les objectifs des serristes. En effet, dans ce cas, lorsque la serre est partiellement ouverte, l'écoulement des eaux de pluie sur la partie restant couverte n'atteint plus la gouttière ou le chéneau et se déverse dans la serre.

D'autre part, l'exécution du mouvement d'ouverture ou de fermeture de la couverture, en particulier si l'on tient compte que des serres peuvent avoir des largeurs atteignant facilement 25 à 30 mètres sur des longueurs pouvant atteindre plusieurs centaines de mètres, pose un problème technique particulièrement complexe.

On connaît également diverses solutions proposées pour réaliser un ombrage de serres.

Le document FR-A-2 568 096 (HARNETIAUX) décrit un store pour une toiture de serre existante dans le but d'assurer une protection de la serre contre le soleil. Le store se dépose en se déroulant sur la serre par translation d'un tube vers le chéneau (gouttière).

Le document DE-B-1 215 429 (W. GABLER) décrit également un dispositif de déroulement d'un tissu ou lattage d'ombrage pour une serre. Il comporte un rouleau d'enroulement et un rouleau de compensation. Le rouleau d'enroulement, commandé par un moteur électrique, se déplace sur une crémaillère et le moteur électrique le suit dans son déplacement sur un rail extérieur, parallèle à la crémaillère. Le déplacement s'effectue à l'intérieur de la serre dans un plan sensiblement horizontal.

Le document NL-A-84 01 662 (VERZUU ONTWIKKELING) décrit une protection solaire destinée à l'ombrage d'une serre ou similaire afin de régler l'illumination de la serre. Il comporte une toile fixée à un point haut de la serre et un tube d'enroulement pour cette toile, l'enroulement de la toile sur le tube découvrant progressivement la serre depuis le bas vers le haut.

Ces documents ne proposent aucune solution pratique au problème spécifique des serres comportant une couverture ou toiture sous forme d'une feuille souple amovible, en particulier pour ce qui concerne la nécessité, en position ouverte partielle de la serre, d'assurer le déversement de eaux de pluie tombant sur la partie couverte dans la gouttière de la serre.

### But de l'invention.

La présente invention vise à résoudre notamment ces problèmes en offrant un système à la fois simple, peu onéreux et fiable pour la réalisation d'une couverture mobile de serre.

### Eléments caractéristiques de la présente invention.

De manière classique, la serre selon l'invention comporte un système de charpente ou ossature et est pourvue, ainsi qu'il est déjà connu, d'une couverture constituée par une feuille souple.

La caractéristique de l'invention est que cette feuille souple est enroulable dans le profil ouvert monté sur un chariot déplaçable sur ladite charpente, depuis le point haut (qui est en principe le faîte) de la serre jusqu'à un point bas de la serre et inversement et, qu'à cet effet, un tube d'enroulement interne sur lequel est fixée la feuille souple est monté dans le profil ouvert, le mouvement de déplacement du profil ouvert avec le chariot entraînant un mouvement de rotation du tube d'enroulement, de manière que, finalement, le déplacement du profil ouvert vers le bas provoque l'enroulement de la feuille souple et le déplacement vers le haut provoque le déroulement de cette même feuille souple qui est fixée à son extrémité opposée à celle qui est fixée au tube d'enroulement.

Avantageusement, le mouvement d'enroulement du tube logé dans le profil ouvert est obtenu par un dispositif de pignon et de crémaillère, le pignon étant fixé sur le tube d'enroulement du profil ouvert, de préférence à une de ses extrémités, et s'engrenant sur une crémaillère latérale, de préférence fixée sur la charpente ou ossature de la serre.

Le déplacement du chariot peut être assuré par tout moyen approprié.

Selon une première forme d'exécution, le déplacement du chariot est réalisé à l'aide d'un système de poulies de renvoi et de câbles montés sur un arbre de commande central unique s'étendant sur toute la longueur de la serre ou fractionné par sections sur la longueur de ladite serre.

Selon une autre forme d'exécution, le déplacement du chariot peut être réalisé à l'aide d'un moteur directement placé sur le pignon ou sur un élément solidaire du pignon s'engrenant sur la crémaillère.

Les dispositifs selon l'invention permettent d'atteindre le but de l'invention, c'est-à-dire de ramener au point bas le chariot dans lequel sera à ce moment enroulée l'intégralité de la feuille souple à l'aide d'un seul dispositif de commande central pouvant s'étendre sur toute la longueur de la serre, le mouvement de l'axe d'entraînement commun provoquant l'enroulement ou le déroulement de la feuille souple simultanément au déplacement du chariot.

Dans toutes les positions d'ouverture partielle, les eaux s'écoulant sur la partie restant couverte, aboutissent à la gouttière.

On conçoit que de tels dispositifs soient simples, fiables et particulièrement intéressants pour des serres de très grande longueur.

D'autres caractéristiques et détails de l'invention apparaîtront à la lecture de la description qui suit d'une forme d'exécution préférée de l'invention illustrée par les dessins en annexe.

### Brève description des dessins.

La figure 1 est une vue partielle en perspective d'un dispositif de recouvrement amovible selon l'invention destiné à une serre. Dans ce dessin, on n'a pas représenté la charpente de la serre. De plus, la vue n'illustre qu'un versant de la serre, étant entendu que le versant opposé est généralement symétrique à celui représenté. Bien entendu, d'autres formes d'exécution restent possibles, notamment dans le cas d'une serre adossée à un mur.

La figure 2 représente un fragment en élévation latérale du dispositif de la figure 1, visant tout particulièrement, à une échelle agrandie, à illustrer la partie supérieure et inférieure du mécanisme du dispositif selon la figure 1.

La figure 3 représente une vue latérale du mécanisme à pignon et crémaillère servant à l'enroulement de la feuille de recouvrement.

La figure 4 est une vue de détail frontale illustrant le montage des poulies de commande par câbles correspondant au détail B de la figure 1.

La figure 5 représente une vue de détail en coupe du profil ouvert présent sur le chariot permettant l'enroulement et le déroulement de la feuille de recouvrement.

### Description détaillée d'une forme d'exécution préférée de l'invention.

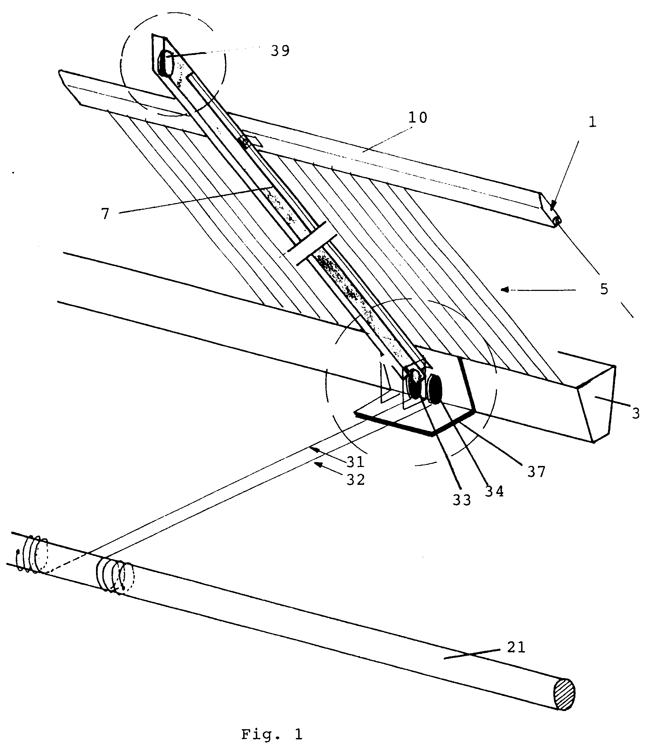

Ainsi qu'on l'a indiquée, la figure 1 représente le dispositif de recouvrement amovible selon l'invention destiné à une serre, sans que la charpente de cette serre ne soit indiquée. Ce dispositif de recouvrement correspond à un versant d'une serre, l'autre versant et le mécanisme correspondant étant en principe symétriques.

Le but poursuivi est de permettre le déplacement d'un chariot indiqué par le repère de référence 1 le long d'un versant de la serre depuis un point haut de la serre qui est en principe le faîte jusqu'à un point bas, en l'occurrence constitué par la gouttière 3. Le point haut correspond au déroulement complet d'une feuille de recouvrement 5 et le point bas signifie l'enroulement complet de la feuille de recouvrement 5 dans le chariot 1. Le chariot est en fait un profil 10 tubulaire ouvert comportant un tube d'enroulement interne 43 pour la feuille de recouvrement 5, une extrémité de la feuille souple étant fixée sur le tube 43 et l'autre extrémité étant fixée au point bas.

La feuille de recouvrement 5 est en principe une feuille souple en matériau synthétique, tel que du PVC plastifié, ou d'autres résines. Ce matériau est généralement spécialement traité pour éviter une dégradation (dépolymérisation) sous l'effet des radiations UV.

En dépit de cette protection, il est recommandable en été et plus particulièrement pendant la journée de ne pas exposer cette feuille aux rayons UV, ce qui explique la nécessité de l'enrouler pour la protéger.

Le principe sur lequel repose l'invention est le fait que le mouvement de déplacement du chariot sous l'effet d'une commande adéquate, provoque également un mouvement de rotation du tube d'enroulement au fur et à mesure du mouvement de déplacement du chariot.

Avantageusement, le mouvement de déplacement du profil ouvert 10 avec le chariot s'effectue sur un rail de guidage 7 ou tout moyen approprié solidaire de la charpente de la serre.

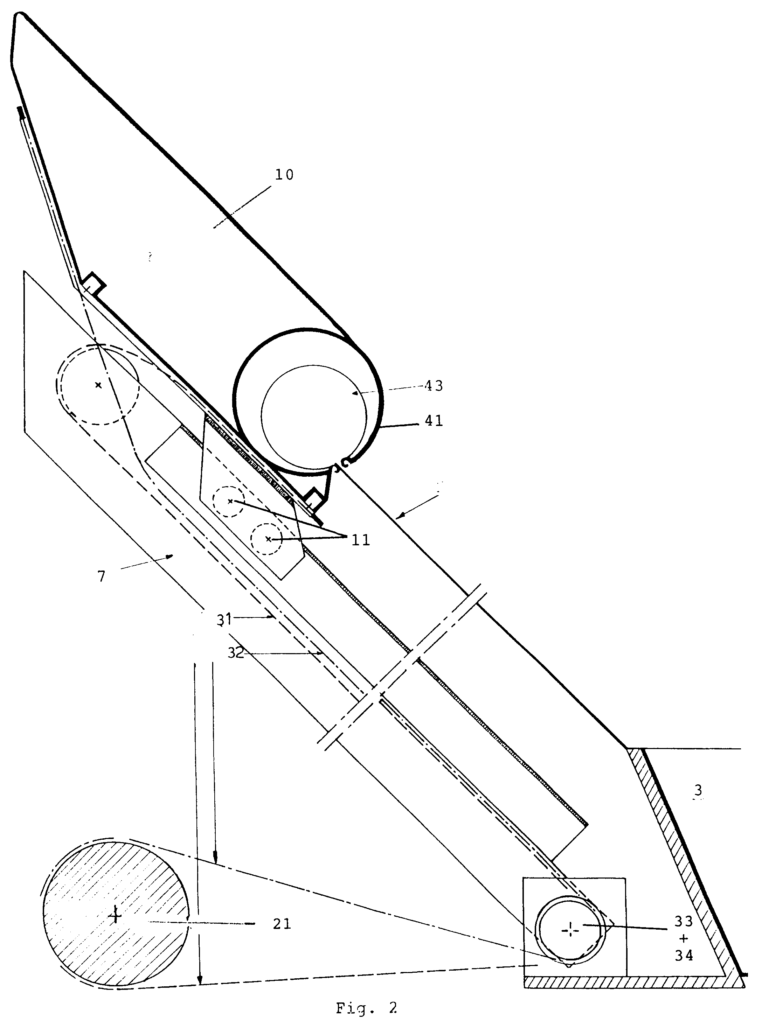

Le mouvement de déplacement du chariot peut s'effectuer par exemple sur plusieurs rails disposés à distance adéquate sur la longueur de la serre, le chariot étant déplaçable sur des galets tels que représentés par le repère 11 dans la figure 2.

Avantageusement, le mouvement du chariot est commandé par un arbre d'entraînement 21 disposé pratiquement au centre de la serre, à hauteur par exemple de la gouttière, et s'étendant longitudinalement tout au long de la serre. Il peut être bien entendu segmenté pour des serres particulièrement longues, en particulier si on désire commander des recouvrements différents pour des sections longitudinales différentes de la serre.

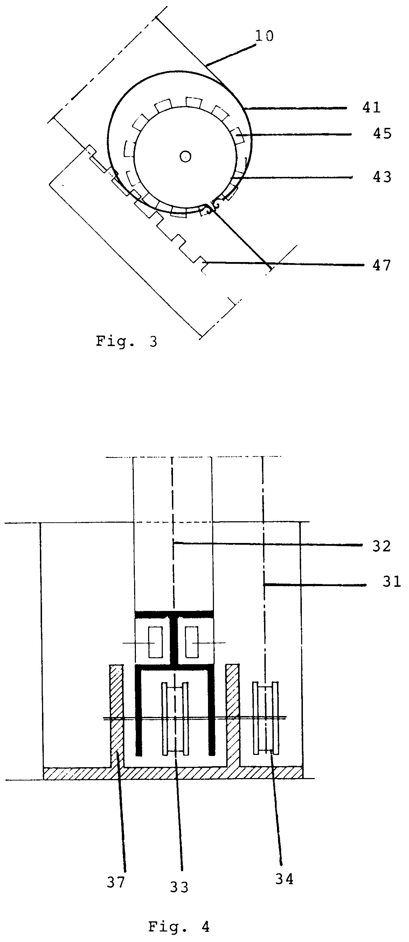

Le mouvement d'abaissement ou de relèvement du chariot 1 (se déplaçant sur des rails 7 grâce aux galets 11), est réalisé à l'aide de deux câbles, à savoir un premier câble 31 et un deuxième câble 32, enroulés symétriquement, c'est -à-dire dans le sens antihorlogique pour le câble 31 et dans le sens horlogique pour le câble 32. Des poulies de renvoi 33 et 34 sont montées en rotation libre sur une console 37 fixée au point bas de la serre, soit directement sur la charpente, soit encore (comme représenté aux figures 1 et 4) sur la gouttière 3. L'un de ces câbles 31 est fixé au chariot 1 (de préférence à sa partie inférieure), l'autre câble 32, après être passé sur une poulie de renvoi supérieure 39, est fixé de préférence à la partie supérieure du chariot.

On comprend que l'entraînement en rotation dans un sens ou dans l'autre de l'arbre 21 provoque un mouvement du chariot vers le haut ou vers le bas, un câble 31 s'enroulant sur l'arbre 21 et l'autre câble 32 se déroulant sur cet arbre 21.

Il convient cependant de noter que d'autres dispositifs d'entraînement pourraient être prévus. C'est ainsi par exemple qu'il est possible d'entraîner le chariot par un moteur à attaque directe ou par un dispositif à pignon et à crémaillère.

Pour atteindre les buts de l'invention, il ne suffit pas de pouvoir monter et descendre le chariot sur le versant de la serre, mais il convient encore que ce mouvement soit accompagné d'un enroulement ou d'un déroulement de la feuille de recouvrement 5.

Ainsi que représenté plus particulièrement aux figures 2 et 3, le profil ouvert 10 du chariot 1 comporte un logement circulaire 41 dans lequel est disposé un tube d'enroulement 43 pour la feuille de recouvrement 5. A au moins un de ses extrémités, le tube d'enroulement 43 est pourvu d'un mécanisme d'enroulement constitué d'un pignon 45 solidaire du tube 43 et engrenant sur une crémaillère 47, montée elle-même sur la charpente de la serre, parallèlement à la pente de celle-ci.

En conséquence, le mouvement du profil ouvert 10 commandé par l'arbre 21, par suite du mouvement d'engrènement du pignon 45 sur la crémaillère 47, provoque, en fonction du sens du mouvement, un enroulement ou un déroulement de la feuille de recouvrement 5. Cette fonction pourrait être exercée par un moyen équivalent. Il suffirait par exemple qu'un troisième câble soit tendu selon la pente du point haut de la serre vers le point bas de cette même serre en s'enroulant sur une poulie de diamètre adéquat portée en bout du tube d'enroulement 43 et calée sur celui-ci, ce câble étant bien entendu tendu. Dans ce cas également, le mouvement du chariot 1 provoque l'enroulement du tube 43 sous l'effet de ce câble.

En conséquence, un seul mécanisme d'entraînement, à savoir l'arbre 21, permet à la fois de relever et d'abaisser le chariot mais provoque également le déroulement ou l'enroulement de la feuille de recouvrement 5.

Selon une autre forme d'exécution qui n'est pas représentée dans les figures, on peut envisager d'effectuer le déplacement du chariot à l'aide d'un moteur qui est placé directement sur le pignon 45 ou sur un élément solidaire de ce pignon 45. Dans ce cas, le pignon assure deux fonctions : le déplacement du chariot 1 et l'enroulement de la feuille souple 5.

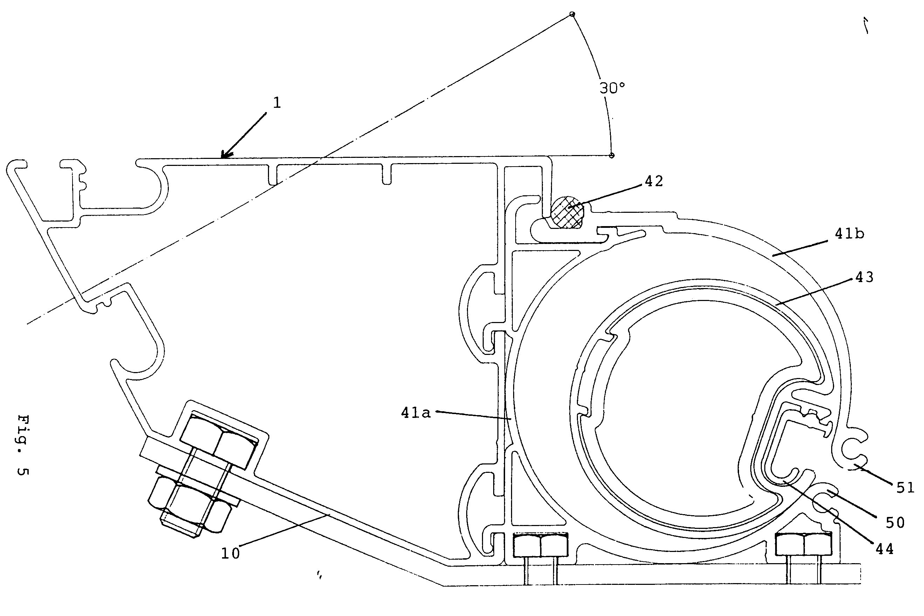

Dans la figure 5, on a représenté plus en détails dans une vue latérale, les éléments constitutifs du profil ouvert 10 du chariot 1. En fait, ce profil ouvert 10 comporte une coquille semi-circulaire 41A. Sur cette coquille 41A, on peut monter un second profil 41B qui peut pivoter sur une charnière longitudinale 42, comme représenté sous un angle de 30°, pour donner accès à l'intérieur du profil circulaire 41 constitué des éléments partiels 41A et 41B.

Ainsi qu'indiqué précédemment, dans l'élément 41 est logé un tube d'enroulement 43. Celui-ci est pourvu d'un élément d'accrochage 44 pour la feuille souple 5.

Afin d'éviter toute détérioration lors de l'enroulement ou du déroulement de la feuille souple 5, le profil tubulaire 41 comporte à son point d'ouverture permettant le passage de la feuille souple, des lèvres arrondies 50 et 51.

## Revendications

1. Dispositif de recouvrement amovible destiné à des serres, comportant une feuille souple, caractérisé en ce que cette feuille souple (5) est enroulable dans un profil ouvert (10) monté sur un chariot (1) déplaçable sur la charpente de la serre depuis un point haut de la serre jusqu'à un point bas de la serre et inversement, et qu'un tube d'enroulement (43) interne sur lequel est fixée la feuille souple (5) est monté dans le profil ouvert (10), le mouvement de déplacement du profil ouvert (10) avec le chariot (1) entraînant un mouvement de rotation du tube d'enroulement (43) de manière que, finalement, le déplacement du profil ouvert (10) vers le bas provoque l'enroulement de la feuille souple (5) et le déplacement vers le haut provoque le déroulement de cette même feuille souple qui est fixée à son extrémité opposée à celle qui est fixée au tube d'enroulement (43).

2. Dispositif selon la revendication 1 caractérisé en ce que le mouvement d'enroulement du tube (43) dans le profil ouvert (10) du chariot (1) est obtenu par un dispositif de pignon (45) et de crémaillère (47), le pignon (45) étant fixé sur le tube d'enroulement (43) et s'engrenant du chariot (1) et s'engrenant sur une crémaillère (47) de préférence fixée sur la charpente latérale de la serre.

3. Dispositif selon la revendication 1 ou 2 caractérisé en ce que le déplacement du profil ouvert (10) avec le chariot (1) est réalisé à l'aide d'un système de poulies de renvoi (33, 34, 39) et de câbles (31, 32) montés sur un arbre (21) de commande central unique s'étendant sur toute la longueur de la serre ou fractionné par sections sur la longueur de ladite serre.

4. Dispositif selon la revendication 1 ou 2 caractérisé en ce que le déplacement du profil ouvert (10) avec le chariot (1) est réalisé à l'aide d'un moteur qui est directement placé sur le pignon (45) ou sur un élément solidaire du pignon (45).

5. Dispositif selon l'une quelconque des revendications 1 à 4 caractérisé en ce que la feuille souple (5) est une feuille en matériau synthétique, de préférence traité pour résister aux radiations UV.

6. Dispositif selon l'une quelconque des revendications 1 à 5 caractérisé en ce que dans les positions d'ouverture partielle de recouvrement de la serre, les eaux de pluie recueillies sur la surface couverte aboutissent dans la gouttière (3).

7. Dispositif selon l'une quelconque des revendications 1 à 6 caractérisé en ce que le profil ouvert (10) comporte une coquille semi-circulaire (41A) pourvue d'un couvercle (41B) également approximativement semi-circulaire, ce couvercle étant relevable pour donner accès au tube d'enroulement (43) en pivotant sur une charnière longitudinale (42).

8. Dispositif selon la revendication 7 caractérisé en ce que ledit tube d'enroulement (43) est pourvu d'un dispositif d'accrochage pour la feuille souple (5).

9. Dispositif selon la revendication 7 ou 8 caractérisé en ce que toute détérioration de la feuille de recouvrement (5) lors de son enroulement ou déroulement est évitée à l'aide de lèvres arrondies (50, 51) montées sur le profil (10) tubulaire du chariot (1).
